(19) Europäisches Patentamt
European Patent Office
Office européen des brevets

(11) Veröffentlichungsnummer: **0 020 306**
**B1**

(12) # EUROPÄISCHE PATENTSCHRIFT

(45) Veröffentlichungstag der Patentschrift: **29.12.82**

(51) Int. Cl.³: **C 09 B 67/12,** C 09 B 67/22

(21) Anmeldenummer: **80810176.0**

(22) Anmeldetag: **27.05.80**

(54) **Verfahren zur Herstellung von Kupferphthalocyaninblau Pigmentzusammensetzungen.**

(30) Priorität: **01.06.79 GB 7919198**

(43) Veröffentlichungstag der Anmeldung: **10.12.80 Patentblatt 80/25**

(45) Bekanntmachung des Hinweises auf die Patenterteilung: **29.12.82 Patentblatt 82/52**

(84) Benannte Vertragsstaaten: **DE FR GB IT**

(56) Entgegenhaltungen:
**DE-A-2 554 252**
**DE-B-1 228 014**
**DE-B-1 260 433**
**FR-A-2 076 889**
**FR-A-2 179 551**
**FR-A-2 282 455**
**FR-A-2 307 022**
**FR-A-2 349 627**
**GB-A-1 140 836**
**GB-A-1 465 972**
**GB-A-1 544 695**
**GB-A-1 546 950**

(73) Patentinhaber: **CIBA-GEIGY AG, Patentabteilung Postfach, CH-4002 Basel (CH)**

(72) Erfinder: **Barraclough, Ronald, Dr., 1 Riverside Craigends Estate Houston, Johnstone Renfrewshire (GB)**
Erfinder: **Langley, Robert, 22 Cheviot Drive Newton Mearns, Glasgow (GB)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Verfahren zur Herstellung von Kupferphthalocyaninblaupigmentzusammensetzungen

Vorliegende Erfindung betrifft ein Verfahren zur Herstellung von Kupferphthalocyaninblaupigmentzusammensetzungen.

Es wurden schon Verfahren zur Herstellung von Phthalocyaninpigmentzusammensetzungen vorgeschlagen, bei denen es sich um eine Lösungsmittelbehandlung und einen Zusatz von Phthalocyaninsulfonamiden zu rohen Phthalocyaninpigmenten handelt.

In der GB-A-1 140 836 wurde ein Verfahren zur Behandlung eines Metallphthalocyaninblaupigments beschrieben, welches darin besteht, daß man das Pigment in trockener pigmentärer Form mit einem polaren aliphatischen Lösungsmittel vermischt, das zumindest teilweise mit Wasser mischbar ist, und das Lösungsmittel vom behandelten Pigment abtrennt. Durch diese Behandlung lassen sich die Eigenschaften des Pigments, z. B. seine Stärke oder sein Glanz, verbessern.

Danach wurde in der GB-A-1 465 972 ein Verfahren zur Herstellung einer Phthalocyaninpigmentzusammensetzung mit verbesserter Stärke und verbessertem Glanz beschrieben, wobei eine wäßrige Aufschlämmung des Phthalocyaninpigments und eines basische Gruppen enthaltenden Phthalocyaninsulfonamids in Gegenwart einer Säure und eines feinteiligen Mahlhilfsmittels gemahlen wird und das Mahlhilfsmittel dann entfernt wird.

Kürzlich wurde in der DE-A-2 554 252 ein Verfahren beschrieben, bei dem rohes Kupferphthalocyanin dadurch in Pigment umgewandelt wird, daß man Kupferphthalocyanin (Teilchengröße unter 0,1 Mikron und durch Kugelmahlung von rohem Kupferphthalocyanin, vorzugsweise in Abwesenheit von Hilfsmitteln, hergestellt) in organischer oder wäßrig-organischer Phase unter Erhitzen behandelt. Das Mahlgut wird diesem Medium in Gegenwart von 0,5 bis 7 Gew.-% eines bestimmten basischen Kupferphthalocyanins zugesetzt, und das Gemisch wird auf eine Temperatur im Bereich von Raumtemperatur bis 180° C gehalten, bis die optimale Farbstärke erreicht ist.

Es wurde nun überraschend gefunden, daß durch Kombinieren einiger Merkmale dieser bekannten Offenbarungen bei Abänderung anderer Merkmale dieser Offenbarungen ein mehrstufiges Verfahren entwickelt werden kann, welches Pigmente mit unerwartet guten Pigmenteigenschaften liefert.

Gegenstand vorliegender Erfindung ist ein Verfahren zur Herstellung von verbesserten Pigmentzusammensetzungen durch a) Vermahlen von rohem Kupferphthalocyaninblaupigment in Gegenwart von 0—50 Gew.-%, bezogen auf das Mahlgut, eines Salzes, b) anschließende Behandlung des Mahlgutes mit einem polaren aliphatischen Lösungsmittel, c) Zusatz vor, während oder nach der Lösungsmittelbehandlung in Stufe b) eines basische Gruppen enthaltenden Kupferphthalocyaninzusatzstoffes zum rohen gemahlenen Pigment, und d) Isolieren der Pigmentzusammensetzung in an sich bekannter Weise, das dadurch gekennzeichnet ist, daß 8—12 Gew.-%, bezogen auf das Rohpigment, eines Kupferphthalocyaninzusatzstoffes der Formel I

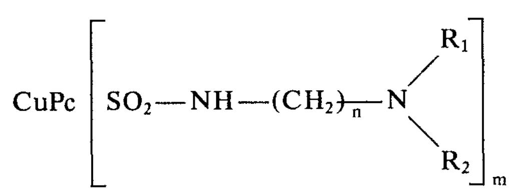

(I)

worin CuPc den Rest des Kupferphthalocyanins darstellt, m und n je für eine ganze Zahl von 1 bis 4 stehen und $R_1$ und $R_2$ je eine gegebenenfalls substituierte Alkylgruppe bedeuten oder $R_1$ und $R_2$ zusammen mit dem N-Atom, an das sie gebunden sind, einen Heterocyclus bilden, verwendet werden und die Lösungsmittelbehandlungsstufe b) in Gegenwart von 0,5 bis 16 Gewichtsteilen einer aliphatischen Carbonsäure mit 1—10 C-Atomen, bezogen auf das Gewicht des Kupferphthalocyaninzusatzstoffes der Formel I, erfolgt.

Als Zusatzstoff der Formel I verwendet man bevorzugt

$$CuPc[SO_2-NH-(CH_2)_3-N(CH_3)_2]_3$$

Das bei dem neuen Verfahren als Ausgangsmaterial verwendete rohe Kupferphthalocyaninpigment enthält gegebenenfalls bis zu 6% Chlor. Das Pigmentausgangsmaterial kann im wesentlichen zu 100% in der $\beta$- oder in der $\alpha$-Kristallform oder als Gemisch der $\beta$- und $\alpha$-Formen vorliegen. Weitere geeignete Pigmentausgangsmaterialien sind die in den britischen Patentschriften Nr. 1 544 695 und 1 546 950 der Anmelderin beschriebenen $\varepsilon$- und $\gamma$-Phthalocyaninpigmente.

Als aliphatische Carbonsäure verwendet man bei der Lösungsmittelbehandlungsstufe b) bevorzugt Essigsäure. Das Verhältnis der Säure zu Kupferphthalocyaninzusatzstoff liegt vorzugsweise zwischen 0,5 : 1 und 4 : 1. Die Gegenwart der Säure ist vorteilhaft, indem sie zur Auflösung des Kupferphthalocyaninzusatzstoffs führt.

Die Isolierung der Pigmentzusammensetzung erfolgt vorzugsweise dadurch, daß man dem nach Entfernung des Lösungsmittels erhaltenen Gemisch so viel Base zusetzt, daß sich ein pH von 6—12,

vorzugsweise 8 bis 9, ergibt, und anschließend das Pigment durch Filtrieren und Trocknen isoliert.

Die Mahlung kann zwar in Abwesenheit von jeglichem Salz stattfinden, doch können geringe Salzmengen vorliegen, ohne sich ungünstig auf das Verfahren oder die endgültigen Pigmenteigenschaften auszuwirken. Die zulässige Menge Salz wird sich dabei nach der Art des Salzes und dem Verfahren, bei dem es vorhanden ist, richten.

Im allgemeinen erfolgt die Mahlung in Gegenwart von 0 bis 50 Gew.-%, vorzugsweise unter 40 Gew.-%, bezogen auf Mahlgut, eines Salzes, bevorzugt wasserfreies Calciumchlorid, wasserfreies Natriumacetat oder wasserfreies Natriumsulfat.

Zur Herstellung des Pigments läßt sich chlorfreies oder chlorhaltiges rohes Kupferphthalocyanin verwenden. Bei Einsatz von chlorfreiem rohem Kupferphthalocyanin liegt das erzeugte Pigment in der $\beta$-Form vor, und bei Verwendung eines chlorhaltigen rohen Kupferphthalocyanins besitzt das gebildete Pigment entweder teilweise oder völlig die $\alpha$-Form.

Die trockene Mahlung erfolgt entweder in völliger Abwesenheit von Flüssigkeiten oder in einer genügend kleinen Menge Flüssigkeit, damit das Pigment die Eigenschaften eines trockenen Pulvers beibehält. Die Mahlung kann in Apparaten wie einer Kugelmühle, Schwingmühle oder sonstigen Zerkleinerungsgeräten durchgeführt werden.

Gewünschtenfalls kann die Mahlung in Gegenwart eines Zusatzstoffs stattfinden, der als Mahlhilfsmittel wirken oder die Wirksamkeit der Lösungsmittelbehandlungsstufe des Verfahrens oder die Leistung des Endprodukts verbessern kann. Die bei der Mahlung angewendete Menge Zusatzstoff kann zweckmäßig bis zu 20 Gew.-%, bezogen auf das Gewicht des Pigments, betragen. Es ist zwar möglich, größere Mengen als 20% einzusetzen, doch bringt dies keinen Vorteil, und die eingesetzte Menge liegt vorzugsweise bei 5 bis 15 Gew.-%, bezogen auf das Gewicht des Pigments. Als Zusatzstoffe eignen sich beispielsweise Phthalimid, Phthalsäureanhydrid, hydriertes Holzharz oder Glycerylmonooleat.

Ferner läßt sich eine kleine Menge flüssiges Amin als Mahlhilfsmittel einsetzen, beispielsweise ein aliphatisches, cycloaliphatisches, heterocyclisches oder aromatisches Mono-, Di- oder Triamin, und Beispiele für geeignete Amine sind Anilin, ortho-Toluidin, Diäthylanilin, Dimethylanilin, n-Butylamin sowie aliphatitische Diamine, wie solche der Formel:

$$RNH \cdot CH_2CH_2CH_2 \cdot NH_2$$

wobei R sich von Talg ableitet. Die Menge flüssiges Amin kann zweckmäßig 0 bis 10 Gew.-% und vorzugsweise 0,5 bis 5 Gew.-%, bezogen auf das Gewicht des Pigments, betragen.

Das polare aliphatische Lösungsmittel, mit dem die Pigmentzusammensetzung behandelt wird, ist ein solches, das zumindest teilweise mit Wasser mischbar ist. Geeignete Lösungsmittel sind in der GB-A-1 140 836 beschrieben und umfassen Alkanole mit 1 bis 4 Kohlenstoffatomen in der Alkylkette, z. B. Methanol, Äthanol, n-Propanol, Isopropanol und n-Butanol, Alkylester von Monocarbonsäuren mit 1 bis 4 Kohlenstoffatomen in der Alkylkette, z. B. Alkylester von Alkansäuren, insbesondere Äthylacetat, Dialkylketone mit jeweils 1 bis 4 Kohlenstoffatomen in den Alkylketten, zum Beispiel Aceton, Methyläthylketon oder Diäthylketon, Alkoxyalkanole mit jeweils 1 bis 4 Kohlenstoffatomen in den Alkylketten der Alkoxy- und Alkanolkomponenten, zum Beispiel 2-Methoxyäthanol oder 2-Äthoxyäthanol, oder Alkylenglykole mit 2 bis 6 Kohlenstoffatomen in der Alkylenkette, z. B. Äthylenglykol oder Diäthylenglykol.

Gewünschtenfalls kann das Lösungsmittel einen Anteil gelösten Wassers enthalten, der nicht ausreicht, eine Trennung in zwei Phasen herbeizuführen, und dies kann also beispielsweise wäßriges Äthanol (z. B. technischer vergällter Alkohol), ein azeotropes Gemisch von Äthanol und Wasser oder ein azeotropes Gemisch von Isopropanol und Wasser sein, wobei das Alkanol jeweils den überwiegenden Bestandteil ausmacht.

Bevorzugt verwendet man als Lösungsmittel Isopropanol oder ein azeotropes Wasser/Isopropanolgemisch.

Wie in der GB-A-1 140 836 angegeben, kann die Lösungsmittelbehandlung des Pigments unter den verschiedensten Bedingungen erfolgen, wobei die Temperatur und der Druck, bei denen die Behandlung erfolgt, und die Zeit, für welche man das Pigment und das Lösungsmittel in Berührung bringt, jeweils von der Art des Pigments und des Lösungsmittels abhängen, um eine optimale Verbesserung der pigmentären Eigenschaften sicherzustellen.

Obwohl das Pigment vorzugsweise bei einer Temperatur im Bereich von 10°C bis zum Siedepunkt des Lösungsmittels beim angewandten Druck mit dem Lösungsmittel zusammengebracht wird, erfolgt bei Durchführung der Behandlung unter Atmosphärendruck die Stufe b) besonders bevorzugt bei einer Temperatur im Bereich von 50°C bis zum Siedepunkt des Behandlungsgemisches. Zwar kann man, wenn erwünscht, bei Überdruck arbeiten, beispielsweise wenn das eingesetzte Lösungsmittel bei der gewählten Behandlungstemperatur sehr flüchtig ist, doch ist es im allgemeinen zweckmäßig, das Pigment bei Atmosphärendruck oder nahe Atmosphärendruck mit dem Lösungsmittel zu behandeln.

Der Anteil Lösungsmittel, mit dem das Pigment im vorliegenden Verfahren behandelt wird, liegt vorzugsweise, bezogen auf das Pigment, im Bereich von 0,5 bis 20 Gewichtsteilen Lösungsmittel,

wobei ein Anteil von 1 bis 15 und insbesondere 5 bis 10 Gewichtsteilen Lösungsmittel pro Gewichtsteil Pigment besonders bevorzugt wird.

Den Kupferphthalocyaninzusatzstoff der Formel I kann man in jeder Stufe des vorliegenden Verfahrens vor, während oder nach dieser Lösungsmittelbehandlung in Stufe (b) zusetzen, doch ist es vorzuziehen, daß man das Pigment und das Derivat mindestens 10 Minuten lang bei der Rückflußtemperatur des bevorzugten Lösungsmittels, d. h. Isopropanol oder das azeotrope Wasser/Isopropanolgemisch, zusammenbringt.

Beispielsweise kann man das erfindungsgemäße Verfahren so durchführen, daß man das gewählte Lösungsmittel mit der aliphatischen Carbonsäure und der Verbindung der Formel I vermischt, dann das rohe gemahlene Kupferphthalocyaninblaupigment dazugibt und anschließend das erhaltene Gemisch 0—4, vorzugsweise 0 bis 2 Stunden zum Rückfluß erhitzt.

Die Pigmentzusammensetzung kann man dadurch vom Lösungsmittel abtrennen, daß man, vorzugsweise nach Verdünnen mit Wasser im Fall flüchtiger Lösungsmittel, das Lösungsmittel abdestilliert. Die dabei verbleibende, weitgehend wäßrige Dispersion des Pigments wird dann mit einer Base wie einem Alkali- oder Erdalkalihydroxyd, -oxyd oder -carbonat oder einer stickstoffhaltigen Base versetzt. Als Basen eignen sich beispielsweise wäßrige Kalilauge, wäßrige Natronlauge und Ammoniak (wäßrig oder Gas). Vorzugsweise wird so viel Base zugegeben, daß sich eine Pigmentdispersion mit einem pH von 6—12, vorzugsweise 8 bis 9, ergibt. Die erhaltene Suspension kann dann auf übliche Weise filtriert, gewaschen und getrocknet werden.

Der Kupferphthalocyaninzusatzstoff der Formel I ist bekannt und läßt sich dadurch herstellen, daß man ein 1—4 Chlorsulfonsäuregruppen enthaltendes Kupferphthalocyaninderivat mit einem Amin der Formel:

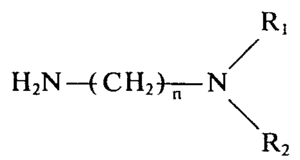

(II)

worin $R_1$, $R_2$ und n die obigen Bedeutungen haben, umsetzt.

Beispiele für Amine der Formel II sind unter anderem N,N-Dimethylaminomethylamin, N,N-Diäthylaminomethylamin, N,N-Dibutylaminomethylamin, N,N-Dimethylaminoäthylamin, N,N-Diäthylaminoäthylamin, N,N-Dipropylaminoäthylamin, N,N-Diäthylaminopropylamin, N,N-Dipropylaminopropylamin, N,N-Dibutylaminopropylamin, N,N-Dimethylaminobutylamin, N,N-Diäthylaminobutylamin, N,N-Dipropylaminobutylamin, N,N-Dibutylaminobutylamin, N-Aminopropylmorpholin, N-Aminoäthylpiperidin, N-Aminoäthylpyrrolidin, N-Aminopropylpipecolin und insbesondere N,N-Dimethylaminopropylamin.

Gemäß einer bevorzugten Ausführungsform erfolgt die Herstellung der Pigmentzusammensetzungen durch:

(a) Vermahlen von rohem Kupferphthalocyaninblaupigment mit 0 bis 40 Gew.-%, bezogen auf Mahlgut, eines Salzes,
(b) anschließende Behandlung des Mahlgutes mit einem polaren aliphatischen Lösungsmittel in Gegenwart einer definitionsgemäßen aliphatischen Carbonsäure,
(c) Zusatz von 8 bis 12 Gew.-%, bezogen auf Rohpigment, eines wie oben definierten Kupferphthalocyaninzusatzstoffs der Formel I, insbesondere

$$CuPc[SO_2NH-(CH_2)_3-N(CH_3)_2]_3$$

zu dem rohen gemahlenen Pigment vor oder während der Lösungsmittelbehandlung,
(d) anschließende Entfernung des Lösungsmittels aus dem nach der Lösungsmittelbehandlung erhaltenen Gemisch und
(e) Zusatz von so viel Base zur wäßrigen Pigmentdispersion, daß sich ein pH zwischen 8 und 9 ergibt.

Die erfindungsgemäß erhaltenen Pigmentzusammensetzungen sind zum Pigmentieren verschiedener Vehikel, insbesondere Druckfarben und speziell Innenanstrichmitteln und technischen Anstrichmitteln, verwendbar.

Die Erfindung wird durch die nachfolgenden Beispiele erläutert, wobei Teile und Prozentangaben Gewichtsteile und Gewichtsprozente sind, falls nicht anders angegeben. Gewichtsteile stehen in derselben Beziehung zu Volumenteilen wie das Kilogramm zum Liter. Beispiele A bis E erläutern Vergleichszusammensetzungen, die außerhalb der vorliegenden Erfindung liegen.

Beispiel 1

Man rührt 340 ml Isopropanol (ungefähr 12% Wasser enthaltend), 11,4 g Eisessig und 5,7 g einer Verbindung der Formel

$CuPc[SO_2-NH-(CH_2)_3-N(CH_3)_2]_3$

30 Minuten bei Raumtemperatur.

Zu diesem Gemisch werden 85 g Mahlgut, bestehend aus 57 g rohem Kupferphthalocyaninblau mit etwa 2% Chlor und 28 g wasserfreiem $CaCl_2$, gegeben. Es wird 6 Stunden lang gemahlen.

Dieses Gemisch wird 30 Minuten bei Raumtemperatur gerührt und 2 Stunden am Rückfluß erhitzt.

Dann setzt man 250 ml Wasser dazu und destilliert das Lösungsmittel ab, wobei der Endpunkt der Destillation erreicht ist, wenn das Isopropanol entfernt worden ist. Nach Abkühlung auf Raumtemperatur (25° C) versetzt man mit 25%iger wäßriger NaOH, bis ein pH von 8,5 bis 9 erreicht ist.

Man rührt das Gemisch 30 Minuten bei Raumtemperatur, filtriert, wäscht und trocknet die entstandene $\alpha$-CuPc-Pigmentzusammensetzung bei 60° C.

Das Pigment besitzt sehr gute Farbstärke sowie Glanz bei ausgezeichnetem Fließverhalten und Ausflockungswiderstand in Innenanstrich- und technischen Anstrichsystemen.

Beispiel A

Man versetzt 340 ml Isopropanol (ungefähr 12% Wasser enthaltend) mit 85 g Mahlgut, bestehend aus 57 g rohem Kupferphthalocyaninblau mit etwa 2% Chlor und 28 g wasserfreiem Calciumchlorid (33% Salz bezogen auf das Mahlgutgewicht). Es wird ungefähr 6 Stunden lang unter Verwendung einer Laboratoriumsschwingmühle gemahlen.

Dieses Gemisch wird 30 Minuten bei Raumtemperatur gerührt und dann 2 Stunden am Rückfluß erhitzt.

Dann setzt man 250 ml Wasser dazu und destilliert das Lösungsmittel ab. Das Pigment wird durch Filtrieren isoliert, neutral und chloridfrei gewaschen und bei 50—60° getrocknet. Das Pigment ist durch die $\alpha$-Kristallkonfiguration gekennzeichnet. Das Pigment besitzt gute Farbstärke sowie Glanz, aber gegenüber Beispiel 1 einen sehr schlechten Ausflockungswiderstand in Innenanstrich- und technischen Anstrichformulierungen. Die rheologischen Eigenschaften sind ebenfalls minderwertig.

Beispiel B

Man rührt 600 ml Isopropanol (ungefähr 12% Wasser enthaltend), 4,4 g Eisessig und 2,2 g einer Verbindung der Formel

$CuPc[SO_2NH(CH_2)_3-N(CH_3)_2]_3$

30 Minuten bei Raumtemperatur. Zu diesem Gemisch gibt man 85 g Mahlgut, bestehend aus 21,25 g rohem Kupferphthalocyaninblau mit etwa 2% Chlor und 63,75 g wasserfreiem Calciumchlorid.

Es wird 6 Stunden lang gemahlen.

Dieses Gemisch wird 30 Minuten bei Raumtemperatur gerührt und dann 2 Stunden am Rückfluß erhitzt.

Dann setzt man 500 ml Wasser dazu und destilliert das Lösungsmittel ab. Nach Abkühlung auf Raumtemperatur (< 25° C) versetzt man mit 25%iger wäßriger NaOH, bis ein pH von 8,5 bis 9,0 erreicht ist. Das Gemisch wird 30 Minuten bei Raumtemperatur gerührt, filtriert, neutral und chloridfrei gewaschen und dann bei 50—60° C getrocknet.

Das $\alpha$-Kupferphthalocyaninpigment zeigt gegenüber Beispiel 1 schlechtere Farbstärke, Ausflokkungswiderstand und Fließverhalten.

Beispiel C

Man gibt 85 g (6 Stunden lang gemahlenes) Mahlgut, bestehend aus 57 g rohem Kupferphthalocyaninblau mit ungefähr 2% Chlor und 28 g wasserfreiem Calciumchlorid zu 500 ml Wasser, 11,4 g Eisessig und 5,7 g

$CuPc(SO_2NH(CH_2)_3N(CH_3)_2)_3$

Das Gemisch wird 30 Minuten bei Raumtemperatur und danach 1 Stunde bei 90—95° C gerührt. Nach Abkühlung auf Raumtemperatur gibt man so viel 25%ige wäßrige NaOH dazu, daß sich ein pH von

8,5—9,0 ergibt. Die Suspension wird 30 Minuten bei Raumtemperatur gerührt und dann filtriert, neutral und chloridfrei gewaschen und schließlich bei 50—60° C getrocknet.

Das α-Pigment zeigt gegenüber Beispiel 1 schlechtere Farbstärke, Glanz, Ausflockungswiderstand und rheologische Eigenschaften in Innenanstrich- und technischen Anstrichformulierungen.

Beispiel D

Man wiederholt die Arbeitsweise des Beispiels 1 mit dem Unterschied, daß die Alkalibehandlungsstufe ausgelassen wird.

Das entstandene α-Pigment ergibt schlechtere Farbstärke und Glanz, aber dem Beispiel 1 ähnliche rheologische Eigenschaften und Ausflockungswiderstand.

Beispiel E

Man wiederholt die Arbeitsweise des Beispiels 1 mit dem Unterschied, daß 2,85 g

$$CuPc[SO_2NH(CH_2)_3N(CH_3)_2]_3$$

und 5,7 g Eisessig eingesetzt werden entsprechend 5 Gew.-% Zusatzstoff auf Pigment.

Das α-Pigment zeigt gegenüber Beispiel 1 verschlechterte koloristische Eigenschaften.

Beispiel 2

Eine Pigmentzusammensetzung wird gemäß der in Beispiel 1 beschriebenen Arbeitsweise hergestellt, jedoch unter Weglassung des wasserfreien $CaCl_2$ bei der Mahlung.

Beispiel 3

Eine Pigmentzusammensetzung wird gemäß der in Beispiel 1 beschriebenen Arbeitsweise hergestellt, jedoch unter Erhitzen am Rückfluß für 1/2 Stunde anstatt 2 Stunden.

Beispiel 4

Eine Pigmentzusammensetzung wird gemäß der in Beispiel 1 beschriebenen Arbeitsweise hergestellt, jedoch unter Erhitzen am Rückfluß für 1 Stunde anstatt 2 Stunden.

Beispiel 5

Eine Pigmentzusammensetzung wird gemäß der in Beispiel 1 beschriebenen Arbeitsweise hergestellt, jedoch unter Weglassung der Stufe des Erhitzens am Rückfluß.

Beispiel 6

Eine Pigmentzusammensetzung wird gemäß der in Beispiel 1 beschriebenen Arbeitsweise hergestellt, jedoch unter Verwendung von wäßrigem Ammoniak (Ammoniumhydroxyd) anstelle von 25%iger wäßriger NaOH, um einen pH von 8,5 bis 9 zu ergeben.

Beispiel 7

Eine Pigmentzusammensetzung wird gemäß der in Beispiel 1 beschriebenen Arbeitsweise hergestellt, jedoch unter Verwendung von Ammoniumhydroxyd anstelle von 25%iger wäßriger NaOH, um einen pH von 8,5 bis 9 zu ergeben, und anschließendem, 30 Minuten langem Erhitzen am Rückfluß vor der Isolierung des Pigments.

In allen Beispielen 2 bis 7 erhält man jeweils gute, mit Beispiel 1 vergleichbare Ergebnisse.

## Beispiel 8

In einen Literkolben gibt man 350 ml Methyläthylketon, 11,4 g Eisessig und 5,7 g einer Verbindung der Formel

$CuPc(SO_2NH(CH_2)_3N(CH_3)_2)_3$

Das Gemisch wird 30 Minuten bei Raumtemperatur gerührt vor dem Zusatz von 85,0 g Mahlgut, bestehend aus 57,0 g rohem Kupferphthalocyaninblau mit 2% Chlor und 28 g wasserfreiem Calciumchlorid.

Es wird 12 Stunden lang gemahlen.

Dieses Gemisch wird 30 Minuten bei Raumtemperatur gerührt und anschließend 2 Stunden am Rückfluß erhitzt. Dann versetzt man mit 250 ml Wasser und destilliert das Lösungsmittel ab, wobei der Endpunkt der Destillation erreicht ist, wenn das Lösungsmittel entfernt worden ist.

Nach Abkühlung auf 20°C versetzt man mit 25%iger wäßriger Natronlauge, bis ein pH von 8,5 bis 9 erreicht ist.

Das Gemisch wird 30 Minuten bei Raumtemperatur gerührt, filtriert und neutral und chloridfrei gewaschen, und die entstandene CuPc-Pigmentzusammensetzung wird bei 60°C getrocknet. Das Pigment ist ein Gemisch der folgenden Kristallmodifikationen:

40% $\alpha$-Kristallform
60% $\beta$-Kristallform

Das Pigment besitzt sehr gute Farbstärke sowie Glanz bei ausgezeichneten Fließeigenschaften und Ausflockungswiderstand in Innenanstrich- und technischen Anstrichsystemen.

## Beispiel 9

Man wiederholt die Arbeitsweise des Beispiels 8, mit dem Unterschied, daß Äthylacetat als Lösungsmittel verwendet wird.

Die koloristische Leistung des Produkts ist ähnlich Beispiel 8. Das Pigment ist ein Gemisch der folgenden Kristallformen:

40% $\alpha$-Kristallform
60% $\beta$-Kristallform

## Beispiel 10

Man wiederholt die Arbeitsweise des Beispiels 8, mit dem Unterschied, daß n-Butanol als Lösungsmittel verwendet wird und die vor der Destillation zugesetzte Wassermenge 700 ml beträgt.

Die koloristischen Ergebnisse des Produkts sind mit denen von Beispiel 8 vergleichbar. Das Pigment ist ein Gemisch der folgenden Kristallformen:

63% $\alpha$-Kristallform
37% $\beta$-Kristallform

## Beispiel 11

Man wiederholt die Arbeitsweise des Beispiels 8, mit dem Unterschied, daß man 228 ml Isopropanol (12% Wasser enthaltend) anstelle des Methyläthylketons verwendet.

Die koloristische Leistung des so hergestellten $\alpha$-CuPc-Pigments ist ähnlich wie in Beispiel 1.

## Beispiel 12

Man wiederholt die Arbeitsweise des Beispiels 11, mit dem Unterschied, daß die Einsatzmenge Isopropanol (12% Wasser enthaltend) auf 456 ml erhöht wird.

Die koloristische Leistung des so erhaltenen $\alpha$-CuPc-Pigments ist ähnlich wie in Beispiel 1.

Beispiel 13

Man wiederholt die Arbeitsweise des Beispiels 1, mit dem Unterschied, daß man den pH nach der Destillation mit verdünnter wäßriger Natronlauge auf 10 stellt und auf unter 20° C abkühlt.

Die koloristische Leistung des so hergestellten $\alpha$-CuPc-Pigments ist vergleichbar mit Beispiel 1.

Beispiel 14

Man wiederholt die Arbeitsweise des Beispiels 13, mit dem Unterschied, daß der pH auf 12 gestellt wird.

Die koloristische Leistung des so hergestellten Produkts ist vergleichbar mit Beispiel 1. Das CuPc-Pigment liegt in der $\alpha$-Kristallmodifikation vor.

Beispiel 15

In einer ähnlichen Arbeitsweise wie in Beispiel 1 beschrieben verwendet man:

4,56 g $CuPc(SO_2NH(CH_2)_3N(CH_3)_2)_3$ (8 Gew.-% bezogen auf Pigment) und 9,12 ml Eisessig.

Die koloristische Leistung des so erhaltenen $\alpha$-CuPc-Pigments ist vergleichbar mit Beispiel 1.

Beispiel 16

In einer ähnlichen Arbeitsweise wie in Beispiel 15 verwendet man:

6,84 g $CuPc(SO_2NH(CH_2)_3N(CH_3)_2)_3$ (12 Gew.-% bezogen auf Pigment) und 13,68 g Eisessig.

Die koloristische Leistung des so erhaltenen $\alpha$-CuPc-Pigments ist vergleichbar mit Beispiel 1.

Beispiel 17

Man wiederholt die Arbeitsweise des Beispiels 1, mit dem Unterschied, daß man verdünnte Kalilauge anstatt Natronlauge verwendet.

Die koloristische Leistung des so hergestellten $\alpha$-CuPc-Pigments ist vergleichbar mit Beispiel 1.

Beispiel 18

Man wiederholt die Arbeitsweise des Beispiels 1, jedoch unter Verwendung von Propionsäure anstelle von Eisessig.

Die koloristische Leistung des so erhaltenen $\alpha$-CuPc-Pigments ist vergleichbar mit Beispiel 1.

Beispiel 19

Man wiederholt die Arbeitsweise des Beispiels 1, jedoch unter Ersatz der Essigsäure durch Ameisensäure.

Die koloristische Leistung des so erhaltenen $\alpha$-CuPc-Pigments ist vergleichbar mit Beispiel 1.

Beispiel 20

Man wiederholt die Arbeitsweise des Beispiels 1, jedoch mit den folgenden Abänderungen:

1. Verwendung von 450 ml Äthylacetat anstelle von Isopropanol;
2. die Stufe des Erhitzens am Rückfluß wird weggelassen;
3. 350 ml Wasser werden vor der Destillation zugesetzt; und
4. der pH wird nach der Destillation auf 9,0 gestellt, und es wird auf unter 20° C abgekühlt.

Die koloristische Leistung des so erhaltenen $\alpha$-CuPc-Pigments ist vergleichbar mit Beispiel 1.

## Beispiel 21

Die Arbeitsweise des Beispiels 20 wird so abgeändert, daß sie vor der Destillation 30 Minuten langes Erhitzen am Rückfluß einschließt.

Die koloristische Leistung des $\alpha$-CuPc-Pigments ist vergleichbar mit Beispiel 1.

## Beispiel 22

Die Arbeitsweise des Beispiels 20 wird so abgeändert, daß sie 1stündiges Erhitzen am Rückfluß einschließt.

Die koloristische Leistung des $\alpha$-CuPc-Pigments ist vergleichbar mit Beispiel 1.

## Beispiel 23

Die Arbeitsweise des Beispiels 20 wird so abgeändert, daß sie die folgenden Änderungen einschließt:

1. Verwendung von 425 ml Methyläthylketon.
2. 30 Minuten Erhitzen am Rückfluß vor der Destillation.

Die koloristische Leistung des so hergestellten $\alpha$-CuPc-Pigments ist vergleichbar mit Beispiel 1.

## Beispiel 24

Die Arbeitsweise des Beispiels 23 wird so abgeändert, daß sie 1stündiges Erhitzen am Rückfluß einschließt.

Die koloristische Leistung des so hergestellten $\alpha$-CuPc-Pigments ist vergleichbar mit Beispiel 1.

## Beispiel 25

Die folgenden Abänderungen werden bei der Arbeitsweise des Beispiels 20 ausgeführt:

1. Verwendung von 350 ml n-Butanol,
2. 30 Minuten langes Erhitzen am Rückfluß vor der Destillation,
3. Zusatz von 700 ml Wasser vor der Destillation.

Die koloristische Leistung des so erhaltenen $\alpha$-CuPc-Pigments ist vergleichbar mit Beispiel 1.

## Beispiel 26

Die Arbeitsweise des Beispiels 25 wird so abgeändert, daß sie 1stündiges Erhitzen am Rückfluß einschließt. Die koloristische Leistung des so hergestellten $\alpha$-CuPc-Pigments ist vergleichbar mit Beispiel 1.

## Beispiel 27

In einer ähnlichen Arbeitsweise wie in Beispiel 1 nimmt man die folgenden Abänderungen vor:

1. Verwendung von 85 g Mahlgut, bestehend aus 57 g rohem Kupferphthalocyaninblau (chlorfrei), 28 g wasserfreiem Calciumchlorid, 0,8 g Diäthylanilin und 0,5 g Glycerinmonooleat. 6–9 Stunden langes Mahlen.
2. 4 Stunden Erhitzen am Rückfluß.

Das so erhaltene $\beta$-Pigment zeigt sehr gute Fließeigenschaften und Ausflockungswiderstand in Innenanstrich- und technischen Anstrichsystemen.

Beispiel 28

Die Arbeitsweise des Beispiels 27 wird so abgeändert, daß man den Kupferphthalocyanin-Antiausflockungszusatzstoff und den Eisessig nach der Stufe des Erhitzens am Rückfluß jedoch vor der Destillation zusetzt.

Die koloristische Leistung des so erhaltenen $\beta$-Pigments ist ähnlich wie in Beispiel 27.

**Patentansprüche**

1. Verfahren zur Herstellung von Pigmentzusammensetzungen durch a) Vermahlen von rohem Kupferphthalocyaninblaupigment in Gegenwart von 0 – 50 Gew.-%, bezogen auf das Mahlgut, eines Salzes, b) anschließende Behandlung des Mahlgutes mit einem polaren aliphatischen Lösungsmittel, c) Zusatz vor, während oder nach der Lösungsmittelbehandlung in Stufe b) eines basische Gruppen enthaltenden Kupferphthalocyaninzusatzstoffes zum rohen gemahlenen Pigment, und d) Isolieren der Pigmentzusammensetzung in an sich bekannter Weise, dadurch gekennzeichnet, daß 8 – 12 Gew.-%, bezogen auf das Rohpigment, eines Kupferphthalocyaninzusatzstoffes der Formel I

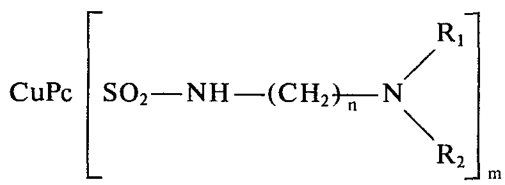

(I)

worin CuPc den Rest des Kupferphthalocyanins darstellt, m und n je für eine ganze Zahl von 1 bis 4 stehen und $R_1$ und $R_2$ je eine gegebenenfalls substituierte Alkylgruppe bedeuten oder $R_1$ und $R_2$ zusammen mit dem N-Atom, an das sie gebunden sind, einen Heterocyclus bilden, verwendet werden und die Lösungsmittelbehandlungsstufe b) in Gegenwart von 0,5 bis 16 Gewichtsteilen einer aliphatischen Carbonsäure mit 1 – 10 C-Atomen, bezogen auf das Gewicht des Kupferphthalocyaninzusatzstoffes der Formel I, erfolgt.

2. Verfahren nach Anspruch 1, dadurch gekennzeichnet, daß das als Ausgangsmaterial verwendete rohe Kupferphthalocyaninpigment gegebenenfalls bis zu 6% Chlor enthält.

3. Verfahren nach Anspruch 1, dadurch gekennzeichnet, daß das Pigmentausgangsmaterial im wesentlichen zu 100% in der $\beta$-Form oder zu 100% in der $\alpha$-Form oder als Gemisch der $\alpha$- und $\beta$-Formen vorliegt.

4. Verfahren nach Anspruch 1, dadurch gekennzeichnet, daß die Isolierung der Pigmentzusammensetzung dadurch erfolgt, daß man dem nach Entfernung des Lösungsmittels erhaltenen Gemisch so viel Base zusetzt, daß sich ein pH von 6 – 12 ergibt, und anschließend das Pigment durch Filtrieren und Trocknen isoliert.

5. Verfahren nach Anspruch 1, dadurch gekennzeichnet, daß als Salz wasserfreies Calciumchlorid, wasserfreies Natriumacetat oder wasserfreies Natriumsulfat vorliegt.

6. Verfahren nach Anspruch 1, dadurch gekennzeichnet, daß als polares aliphatisches Lösungsmittel ein Alkanol mit 1 – 4 Kohlenstoffatomen in der Alkylkette, ein Alkylester einer Monocarbonsäure mit 1 – 4 Kohlenstoffatomen in der Alkylkette, ein Dialkylketon mit jeweils 1 – 4 Kohlenstoffatomen in der Alkylkette, ein Alkoxyalkanol mit jeweils 1 – 4 Kohlenstoffatomen in den Alkylketten der Alkoxy- oder Alkanolkomponenten oder ein Alkylenglykol mit 2 – 6 Kohlenstoffatomen in der Alkylenkette vorliegt.

7. Verfahren nach Anspruch 1, dadurch gekennzeichnet, daß als Lösungsmittel Isopropanol oder ein azeotropes Wasser/Isopropanolgemisch vorliegt.

8. Verfahren nach Anspruch 1, dadurch gekennzeichnet, daß bei Durchführung der Behandlung unter Atmosphärendruck die Stufe b) des Verfahrens bei einer Temperatur im Bereich von 50°C bis zum Siedepunkt des Behandlungsgemisches erfolgt.

9. Verfahren nach Anspruch 1, dadurch gekennzeichnet, daß als Zusatzstoff der Formel I

$$CuPc[SO_2-NH-(CH_2)_3-N(CH_3)_2]_3$$

vorliegt.

**Claims**

1. A process for the production of a pigment composition by

(a) milling a crude copper phthalocyanine blue pigment in the presence of 0 – 50% by weight, based on milled material, of a salt;

(b) subsequently treating the milled material with a polar aliphatic solvent;
(c) adding a copper phthalocyanine additive which contains basic groups to the red milled pigment before, during or after the solvent treatment of step b), and
(d) isolating the pigment composition in a manner known per se, which process comprises using 8 to 12% by weight, based on crude pigment, of a copper phthalocyanine additive of the formula I

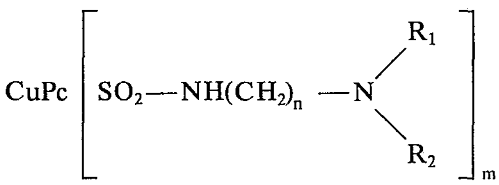

(I)

wherein CuPc is the residue of copper phthalocyanine, m and n are each an integer of from 1 to 4, and $R_1$ and $R_2$ are each an optionally substituted alkyl group, or $R_1$ and $R_2$, together with the N atom to which they are bonded, form a heterocycle, and effecting the solvent treatment step b) in the presence of 0.5 to 16 parts by weight of an aliphatic carboxylic acid containing 1 to 10 carbon atoms, based on the weight of the copper phthalocyanine additive of the formula I.

2. A process as claimed in claim 1, wherein the crude copper phthalocyanine pigment used as starting material optionally contains up to 6% of chlorine.
3. A process as claimed in claim 1, wherein the pigment starting material is essentially 100% beta form or 100% alpha form, or a mixture of beta- and alpha forms.
4. A process as claimed in claim 1, wherein the isolation of the pigment composition is carried out by the addition to the mixture obtained after removal of the solvent, of an amount of a base sufficient to give a pH of 6—12, and subsequently isolationg the pigment by filtration and drying.
5. A process as claimed in claim 1, wherein the salt is anhydrous calcium chloride, anhydrous sodium acetate or anhydrous sodium sulphate.
6. A process as claimed in claim 1, wherein the polar aliphatic solvent is an alkanol having from 1 to 4 carbon atoms in the alkyl chain; an alkyl monocarboxylate having from 1 to 4 carbon atoms in the alkyl chain; a dialkyl ketone having from 1 to 4 carbon atoms in each alkyl chain; an alkoxyalkanol having from 1 to 4 carbon atoms in the alkyl chains of each of the alkoxy and alkanol components, or an alkylene glycol having from 2 to 6 carbon atoms in the alkylene chain.
7. A process as claimed in claim 1, wherein the solvent is isopropanol or a water-isopropanol azeotrope mixture.
8. A process as claimed in claim 1, wherein stage (b) of the process is effected at a temperature within the range from 50° C to the boiling point of the treatment mixture when the treatment is effected at atmospheric pressure.
9. A process as claimed in claim 1, wherein the additive of formula I is

$$CuPc\,[SO_2-NH-(CH_2)_3-N(CH_3)_2]_3$$

**Revendications**

1. Procédé de production de compositions de pigments, par a) broyage d'un pigment brut de bleu de phtalocyanine de cuivre en présence de 0,50% en poids, par rapport à la matière à broyer, d'un sel; b) traitement subséquent de la matière broyée avec un solvant aliphatique polaire, c) addition au pigment brut broyé avant, pendant ou après le traitement par le solvant à l'étape b), d'un additif à base de phtalocyanine de cuivre contenant des groupes basiques d) isolement, de façon connue en soi de la composition de pigment, procédé caractérisé en ce qu'on utilise 8 à 12% en poids, par rapport au pigment brut, d'un additif à base de phtalocyanine de cuivre de formule I

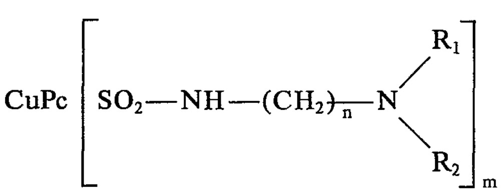

(I)

dans laquelle CuPc représente le radical de la phtalocyanine de cuivre; m et n sont chacun un nombre entier 1 à 4; et $R_1$ et $R_2$ représentent chacun un groupe alkyle éventuellement substitué, ou bien $R_1$ et $R_2$ forment, avec l'atome d'azote auquel ils sont reliés, un hétérocycle et l'on effectue l'étape b) de traitement par un solvant en présence de 0,5 à 16% en poids d'un acide carboxylique aliphatique ayant 1 à 10 atomes de carbone, par rapport au poids de l'additif à base de phtalocyanine de cuivre de

formule I.

2. Procédé selon la revendication 1, caractérisé en ce que le pigment brut de phtalocyanine de cuivre que l'on utilise comme matière de départ contient éventuellement jusqu'à 6% de chlore.

3. Procédé selon la revendication 1, caractérisé en ce que la matière pigmentaire de départ se présente essentiellement à 100% sous la forme $\beta$ ou à 100% sous la forme $\alpha$ ou comme mélange des formes $\alpha$ et $\beta$.

4. Procédé selon la revendication 1, caractérisé en ce qu'on effectue l'isolement de la composition de pigment en ajoutant, au mélange obtenu après élimination du solvant, la quantité de base nécessaire pour obtenir un pH de 6 à 12, et en isolant ensuite le pigment par filtration et séchage.

5. Procédé selon la revendication 1, caractérisé en ce que le sel utilisé se présente sous forme de chlorure de calcium anhydre, d'acétate de sodium anhydre ou de sulfate de sodium anhydre.

6. Procédé selon la revendication 1, caractérisé en ce que le solvant aliphatique polaire que l'on utilise se présente sous forme d'un alcanol ayant 1 à 4 atomes de carbone dans la chaîne alkyle, d'un ester alkylique d'un acide monocarboxylique ayant 1 à 4 atomes de carbone dans la chaîne alkylique, d'une dialkylcétone ayant un à quatre atomes de carbone dans chacune des chaînes alkyles, d'un alcoxy alcanol ayant à chaque fois 1 à 4 atomes de carbone dans les chaînes alkyles des fragments alcoxy et alcanol ou d'un alkylène glycol ayant 2 à 10 atomes de carbone dans la chaîne alkylène.

7. Procédé selon la revendication 1, caractérisé en ce qu'on utilise comme solvant de l'isopropanol ou un mélange azéotrope eau/isopropanol.

8. Procédé selon la revendication 1, caractérisé en ce que lors de la mise en oeuvre du traitement sous la pression atmosphérique, on effectue l'étape (b) du procédé à une température comprise entre 50° C et le point d'ébullition du mélange de traitement.

9. Procédé selon la revendication 1, caractérisé en ce qu'on utilise comme additif un additif de formule I

$$CuPc[SO_2-NH-(CH_2)_3-N(CH_3)_2]_3$$